# EUROPÄISCHE PATENTSCHRIFT

(11) **EP 3 433 093 B1**
(45) Veröffentlichungstag und Bekanntmachung des Hinweises auf die Patenterteilung: **04.09.2019**
(21) Anmeldenummer: 17742968.5
(22) Anmeldetag: 11.07.2017
(51) Int. Cl.: B32B 1/08, B32B 5/18, B32B 5/20, B32B 15/04, B32B 27/06, B32B 27/08, B32B 27/30, F16L 59/14, F16L 59/02, C08J 9/12, C08J 9/14

(54) **THERMISCH GEDÄMMTE MEDIUMROHRE MIT HFO-HALTIGEM ZELLGAS**
THERMALLY INSULATED MEDIUM PIPES HAVING HFO-CONTAINING CELL GAS
CONDUITES POUR FLUIDES THERMIQUEMENT ISOLÉES PRÉSENTANT UN GAZ CONTENANT DU HFO DANS LES CELLULES

(30) Priorität: 20.07.2016 CH 9372016
(43) Veröffentlichungstag der Anmeldung: 30.01.2019
(60) Teilanmeldung: 19184432.3
(73) Patentinhaber: Brugg Rohr Ag Holding, 5200 Brugg (CH)
(72) Erfinder: KRESS, Jürgen, 8966 Oberwil-Lieli (CH); DAMBOWY, Christian, 5412 Gebenstorf (CH)
(74) Vertreter: Grimm, Siegfried
(86) Internationale Anmeldenummer: PCT/EP2017/067419
(87) Internationale Veröffentlichungsnummer: WO 2018/015216

(56) Entgegenhaltungen:
- EP-A1- 0 897 788
- EP-A1- 2 340 929
- WO-A1-2015/042300
- DE-A1-102010 015 462

## Beschreibung

Die Erfindung betrifft Rohrsysteme enthaltend eine Wärmedämmung, insbesondere thermisch gedämmte Mediumrohre sowie thermisch gedämmte Abdeckungsvorrichtungen oder Muffen für die Verbindung von Leitungsrohren mit verbesserter Wärmedämmung. Ferner betrifft die Erfindung Verfahren zur Herstellung derartiger Vorrichtungen sowie die Verwendung von Polymerschäumen, welche Hydrofluorolefine (HFO) enthalten in derartigen Vorrichtungen und zur Herstellung derartiger Vorrichtungen. Schlussendlich betrifft die Erfindung die Verwendung von HFO als Zellgas in Wärmedämmungen.

Rohrsysteme enthaltend eine Wärmedämmung, auch vorisolierte Rohrsysteme, oder thermisch gedämmte Rohrsysteme genannt, sind an sich bekannt und bewährt. Solche Rohrsysteme umfassen flexible oder starre Mediumrohre, welche von einer Wärmedämmung umgeben sind, welche ihrerseits von einem Mantel umgeben ist, sowie ggf. Muffen und / oder Abdeckungsvorrichtungen. Je nach Aufbau werden diese vorisolierten Rohrsysteme als Kunststoffmediumrohrsystem (PMR) oder Kunststoffmantelrorhsystem (KMR) bezeichnet. Bei ersteren weisen die verwendeten Mediumrohre eine gewisse Biegbarkeit auf, so dass auch der gesamte Verbund mit einem gewissen Kraftaufwand auf Trommeln gewickelt werden kann. Man spricht deshalb auch von flexiblen Rohrsystemen. Bei letzterem sind die verwendeten Mediumrohre nicht biegbar, deshalb spricht man bei dem gesamten Verbund auch von starren Rohrsystemen. Entsprechend sind thermisch gedämmte Mediumrohre bzw. Leitungsrohre mit einer oder mehreren Wärmedämmschichten bekannt; ebenso deren Herstellung. So sind aus EP0897788 und aus EP2213440 Verfahren zur kontinuierlichen Herstellung von thermisch gedämmten Mediumrohren bekannt. Aus EP2248648 ist ein Verfahren zur Herstellung von einzelnen, starren Rohrabschnitten bekannt.

Bei solchen Rohrsystemen verändert sich bei dem in der Regel als Dämmmaterial verwendeten Schaumstoff (z.B. Polyuretahan, PU) im Laufe der Zeit dessen Zusammensetzung der Zellgase. Dies geschieht durch Diffusion von Stickstoff und Sauerstoff aus der Umgebung in den Schaum hinein und durch Diffusion der ursprünglich im Schaum enthaltenen Schäum- bzw. Zellgase, insbesondere Kohlendioxid und anderer Treibmittel, aus dem Schaum heraus. Die Luftgase haben eine deutlich höhere thermische Leitfähigkeit als das ursprünglich enthaltene Kohlendioxid und die sonst üblicherweise verwendeten Treibmittel.

Um diese Diffusionsprozesse zu minimieren wurde vorgeschlagen, sogenannte Barriereschichten in den Aussenmantel zu integrieren.

Als Barriereschichten können metallische Schichten zur Anwendung kommen. Bei der Verwendung von metallischen Schichten wird nicht nur der Gasaustausch vollständig unterbunden, was erwünscht ist, sondern es wird auch Wasserdampf komplett an der Diffusion gehindert. Dies ist insbesondere bei der Verwendung von Mediumrohren aus Kunststoff problematisch, da durch diese als Medium typischerweise Wasser fliesst, weshalb durch deren Wände beständig eine, wenn auch nur geringe Menge, Wasserdampf migriert. Dieser Wasserdampf muss die Möglichkeit haben nach aussen zu dringen bzw. mit der Umgebung ins Gleichgewicht zu kommen, da sich sonst im Laufe der Zeit Wasser in der Wärmedämmung des thermisch gedämmten Leitungsrohrs anreichert, wodurch die thermische Leitfähigkeit deutlich ansteigt und die Gefahr besteht, dass die thermische Isolation auf Dauer Schaden nimmt.

Als Barriereschichten können Schichten, die aus einem oder mehreren polymeren Materialien bestehen, zur Anwendung kommen. So beschreibt EP1355103 thermisch isolierte Leitungsrohre, welche eine Barriereschicht aus Ethylenvinylalkohol (EVOH), Polyamid (PA) oder Polyvinylidendichlorid (PVDC) enthalten. Ferner beschreibt EP2340929 ein Kunststoffmantelrohr dessen Aussenmantel als Mehrschichtrohr ausgebildet ist und in seinem Inneren eine Gaspermeations-Sperrschicht ("Barriere") aufweist. Die in diesen Dokumenten beschriebenen Rohre sind schwierig herzustellen und / oder weisen eine ungenügende Isolationsfähigkeit auf. Aus CH710709 (nachver-öffentlicht) und WO2004/003423 sind Leitungsrohre mit thermischer Dämmung und einer polymeren Barriereschicht bekannt; diese Polymere enthalten Polyketone bzw. EVOH.

Zur Verbindung von thermisch isolierten Rohren werden Formteile und Verbindungsstücke verwendet. Insbesondere werden als Formteile Abdeckschalen verwendet, wie in WO2008/019791 beschrieben. Oder es werden als Verbindungsstücke Muffen verwendet, insbesondere bei der Verbindung von starren Rohren. Auch bei solchen Formteilen und Verbindungsstücken stellen sich die genannten Probleme.

Schaumstoffe als Dämmmaterial sind an sich bekannt; WO2015/042300 beschreibt geschlossenzellige starre Polyurethanschäume welche HFOs oder HFCOs enthalten. Diese Schäume werden in einem Vakuum-unterstütztem Prozess hergestellt und sind für die Isolation von Geräten geeignet.

Es ist eine Aufgabe der Erfindung ein thermisch gedämmtes Leitungsrohr sowie Formteile und Verbindungsstücke zur Verfügung zu stellen, welche die genannten Nachteile nicht aufweisen.

Die vorstehend umrissenen Aufgaben werden gemäss den unabhängigen Ansprüchen gelöst. Die abhängigen Ansprüche stellen vorteilhafte Ausführungsformen dar. Weitere vorteilhafte Ausführungsformen sind der Beschreibung und den Figuren zu entnehmen. Die im Zusammenhang mit der vorliegenden Erfindung gegebenen allgemeinen, bevorzugten und besonders bevorzugten Ausführungsformen, Bereiche usw. können beliebig miteinander kombiniert werden. Ebenso können einzelne Definitionen, Ausführungsformen usw. entfallen bzw. nicht relevant sein.

Die vorliegende Erfindung wird nachstehend detailliert beschrieben. Es versteht sich, dass die verschiedenen nachstehend offenbarten und beschriebenen Ausführungsformen, Bevorzugungen und Bereiche beliebig miteinander kombiniert werden können. Ausserdem können, in Abhängigkeit von der Ausführungsform, einzelne Definitionen, Bevorzugungen und Bereiche nicht zur Anwendung kommen. Ferner schliesst der Begriff "umfassend" die Bedeutungen "enthaltend" und "bestehend aus" ein.

Die in der vorliegenden Erfindung verwendeten Begriffe werden im allgemein üblichen, dem Fachmann geläufigen Sinn verwendet. Sofern sich aus dem direkten Zusammenhang keine andere Bedeutung ergibt, haben die folgenden Begriffe dabei insbesondere die hier angegebene Bedeutung / **Definitionen.**

Die vorliegende Erfindung wird weiterhin durch die **Figuren** illustriert; neben der Nachfolgenden Beschreibung sind weitere Ausgestaltungen der Erfindung diesen Figuren zu entnehmen.
**Fig. 1** zeigt schematisch den Aufbau eines erfindungsgemässen Leitungsrohrs (1) im Querschnitt. Dabei ist (2) der Aussenmantel mit Aussenseite (6) der Umgebung zugewandt und Innenseite (5) der Wärmedämmung zugewandt; (3) die Wärmedämmung mit Zellgas indiziert; (4) das Mediumrohr.
**Fig. 2** zeigt schematisch den Aufbau einer bevorzugten Ausgestaltung des Aussenmantels (2). Dabei ist (7) die äussere Polymerschicht (insbes. Thermoplast); (8) eine äussere Haftvermittlerschicht, (9) die Barriereschicht; (10) eine innere Haftvermittlerschicht und (11) die innere Polymerschicht (insbes. Thermoplast).
**Fig. 3** zeigt eine graphische Darstellung der Abhängigkeit des Wertes der Wärmeleitfähigkeit (Abszisse in der Einheit mW/m*K) eines PU-Schaums gemessen bei 50 °C in Abhängigkeit von der Zusammensetzung des Zellgases (Ordinate in der Einheit Vol %). Die Quadrate repräsentieren Cyclopentan, die Kreise CO₂, die Dreiecke HFO.
**Fig. 4** zeigt eine graphische Darstellung der durchschnittlichen Porengrösse(Abszisse in der Einheit µm) eines PU-Schaums in Abhängigkeit von der Zellgaszusammensetzung (Ordinate in der Einheit Vol%). Die Quadrate repräsentieren Cyclopentan, die Kreise CO₂, die Dreiecke HFO.
**Fig. 5** zeigt eine graphische Darstellung der Viskosität (Abszisse in der Einheit mP*sec) eines Polyols mit verschiedenen Gehalten (Ordinate in der Einheit Gew %) von Cyclopentan bzw. HFO 1233zd. Die Quadrate repräsentieren Cyclopentan, die Dreiecke HFO.

In einem **ersten Aspekt** betrifft die Erfindung somit ein **Rohrsystem** enthaltend eine Wärmedämmung (auch vorisoliertes Rohrsystem oder thermisch gedämmtes Rohrsystem genannt), in welchem besagte Wärmedämmung einen Schaumstoff umfasst, dessen Zellgas Hydrofluorolefine (HFOs) enthält. Solche Rohrsysteme, jedoch ohne das genannte Zellgas, sind an sich bekannt und umfassen thermisch gedämmte Leitungsrohre, Muffen und Abdeckungsvorrichtungen zur Verbindung solcher Leitungsrohre.

In einer ersten Ausgestaltung betrifft die Erfindung ein thermisch gedämmtes **Leitungsrohr** (1), umfassend mindestens ein Mediumrohr (4), mindestens eine um das Mediumrohr herum angeordnete Wärmedämmung (3) und mindestens einen um die Wärmedämmung herum angeordneten Aussenmantel (2), dadurch gekennzeichnet, dass besagter Aussenmantel (2) gegebenenfalls eine Barriere (9) aus Kunststoff umfasst, besagtes Mediumrohr (4) als ein flexibles Rohrstück ausgebildet ist und dass besagte Wärmedämmung (3) einen Schaumstoff umfasst, dessen Zellgas die nachstehend definierten Komponenten enthält.

Dieser Aspekt der Erfindung soll nachstehend näher erläutert werden
**Wärmedämmung (3):** Die Wärmedämmung umschliesst das Mediumrohr teilweise oder vollständig, bevorzugt vollständig. Als Wärmedämmung sind insbesondere aufgeschäumte Kunststoffe ("Schaumstoffe") geeignet, die in Ihren Zellen ein Zellgas enthalten. Die Wärmedämmung kann entlang ihres Querschnitts homogen sein oder aus mehreren Lagen aufgebaut sein. Typischerweise ist die Wärmedämmung in Leitungsrohren homogen aufgebaut.

**Zellgase:** Als Zellgase werden die in der Wärmedämmung vorliegenden Gase bezeichnet. Diese sind eine Folge der Herstellung und setzen sich zusammen aus chemischen und physikalischen Treibmitteln, bzw. deren Reaktionsprodukten. Typischerweise werden solche Zellgase während des Schäumprozesses zugegeben, oder sie werden während des Schäumprozesses gebildet.

Gemäss vorliegender Erfindung ist das Zellgas im Schaumstoff der Wärmedämmung dadurch gekennzeichnet, dass es Hydrofluorolefine (HFOs) enthält. Das Zellgas kann nur aus einem oder aus mehreren HFOs bestehen und ggf. zusätzlich weitere Komponenten enthalten. Erfindungsgemäß enthält das Zellgas 10-100 vol% HFOs, bevorzugt 20-100 vol% HFOs, mehr bevorzugt 30-100 vol% HFOs, besonders bevorzugt 40-100 vol% HFOs, ganz besonders bevorzugt 50-100 vol% HFOs. Entsprechend kann das Zellgas weitere Komponenten enthalten.

In einer Ausgestaltung enthält das Zellgas 0-50 vol% (Cyclo)-Alkane, bevorzugt 0-45 vol% (Cyclo)-Alkane, mehr bevorzugt 0-40 vol% (Cyclo)-Alkane, besonders bevorzugt 0-35 vol% (Cyclo)-Alkane. Bevorzugt beträgt das Verhältnis HFOs zu (Cyclo)-Alkane mindestens 2.5:1, bevorzugt mindestens 3:1.
In einer weiteren Ausgestaltung enthält das Zellgas zusätzlich oder alternativ bis zu 50 vol% CO₂, bevorzug 0-40 vol% CO2, besonders bevorzugt 0-30% CO2.
In einer weiteren Ausgestaltung enthält das Zellgas zusätzlich oder alternativ bis zu bis zu 5 vol% Stickstoff (N₂) und/oder Sauerstoff (O₂).
Diese weiteren Komponenten können dem Treibmittel zugesetzt werden, wie z.B. die genannten (Cyclo)-alkane; sie können während der Herstellung des Schaumstoffs entstehen, wie z.B. CO₂; sie können während des Produktionsprozesses in den Schaumstoff gelangen, wie bspw. Luft, O₂, N₂.

Es hat sich überraschend gezeigt, dass bereits bei so geringen Anteilen wie bspw. 10 vol% HFO im Zellgas die Eigenschaften von Rohrsystemen, insbesondere von thermisch gedämmten Leitungsrohren, in einer Reihe von Merkmalen verbessern.
Namentlich wurde gefunden, dass die hier beschriebenen Leitungsrohre ein überraschend besseres Isolationsverhalten aufweisen. Ohne sich an eine Theorie gebunden zu fühlen wird davon ausgegangen, dass die verbesserten Isolationseigenschaften nicht nur durch Materialeigenschaften der HFOs (Wärmeleitfähigkeit) begründet sind, sondern auch durch ein verbessertes Aufschäumen, hervorgerufen durch die veränderte Viskosität.

Im Falle von PU-Schaumstoffen und PIR-Schaumstoffen führt die Zugabe von HFO zu einer der beiden Ausgangskomponenten (Isocyanat bzw Polyol) bzw. während der direkten Vermischung im Mischkopf zu einer markanten Viskositätserniedrigung. Ohne sich an eine Theorie gebunden zu fühlen wird davon ausgegangen, dass die verringerte Viskosität die Durchmischung der beiden Komponenten verbessert und dadurch die Ausbildung vergleichsweise kleinerer Zellen begünstigt.

Um eine Viskositätsverringerung in ähnlicher Grössenordnung mit Cyclopentan als Treibmittel zu erreichen, könnte alternativ auch dessen Gehalt beispielsweise um das 1.86 fache gesteigert werden. Dies wäre der Faktor, um den sich die Molekulargewichte des HFO 1233zd (130.5 g/mol) und von Cyclopentan (70.2 g/mol) unterscheiden, dies hätte aber mehrere nachteilige Konsequenzen:
a)Zum einen würde während des Schäumprozesses eine doppelte Menge des Treibgases expandieren, was zu unkontrollierbaren Veränderungen der Schaumstruktur führte. Existierende PU-Schäume und die Produktionsanlagen sind für die geringere Menge Cyclopentan optimiert und grosse mengenmässige Veränderungen hinsichtlich des expandierenden Treibmittels hätten umfangreiche Neuentwicklungen zur Folge.
b) Cyclopentan wirkt als Weichmacher des PU-Schaums. Eine um das 1.86 fach erhöhte Menge führt zu dessen markanter Erweichung. Diese ist zum einen nicht gewünscht, weil der Schaum eine tragende Rolle spielt, d. h. für die mechanische Stabilität des gesamten Verbundes unabdingbar ist. Dies ist zum anderen nicht gewünscht, weil die zunehmende Weichheit des Schaums im Herstellungsprozess dazu führt, dass der gesamte Rohrverbund von der idealen runden Querschnittsgeometrie mehr und mehr abweicht. Somit wurde gefunden, dass der vollständige oder teilweise Ersatz von Cyclopentan durch HFOs die mechanischen Eigenschaften des Schaumstoffs verbessert. Üblicherweise wird dem Ausgangsmaterial Cyclopentan zugesetzt, um dessen Viskosität zu verringern; die Maximalmenge wird jedoch dadurch begrenzt, dass der erzeugte Schaumstoff ausreichende mechanische Festigkeit aufweisen muss. Durch den Ersatz von Cyclopentan durch HFOs können diese widerstrebenden Ziele erreicht werden. Der Einsatz einer vergleichbaren Menge HFO führt zu Ausgansmaterialien mit niedrigerer Viskosität bei gleichbleibender mechanischer Festigkeit des finalen Schaumstoffs. Somit kann bei gleichbleibender Produktqualität die Herstellbarkeit verbessert werden.

Ferner wurde gefunden, dass die Zugabe des HFO zu einer der Ausgangskomponenten bzw. die direkte Zugabe zu den beiden Ausgangskomponenten im Mischkopf deren Brennbarkeit verringert. Dieser Effekt ist sehr von Vorteil, weil dadurch die sicherheitstechnischen Anforderungen an eine solche Produktionsanlage verringert sind und dadurch die Auslegung einer entsprechenden Produktionsanlage deutlich vereinfacht wird und somit Kosten eingespart werden können, welche andernfalls anfallen wenn mit brennbaren Treibmitteln gearbeitet wird.

Zusammengefasst kann somit festgestellt werden, dass durch den teilweisen oder vollständigen Ersatz von Cyclopentan (Cp)durch HFOs die bekannten Probleme auf elegante Weise gelöst werden können. Einerseits kann mehr Treibmittel zugegeben werden, was zu einer gewünschten Viskositätsverringerung führt. Gleichzeitig bleibt aber die expandierende Wirkung im Wesentlichen unverändert und es benötigt keine grundlegenden Anpassungen an Rezeptur und Produktionsanlage. Schlussendlich wird durch den Ersatz des brennbaren Cyclopentan durch das unbrennbare HFO der Arbeitsschutz verbessert und die Investitionskosten für eine solche Produktionsanlage verringert.

Es wurde ferner gefunden, dass hohe Gehalte an (Cyclo) Alkanen, insbesondere Cyclopentan, einen negativen Einfluss auf die Produktqualität haben. Erfahrungsgemäss führt ein zu hoher Gehalt an Cyclopentan im Polyol zu der Bildung von grossen Blasen im Schaum, die dadurch zustande kommen, dass das Treibmittel (insbes. Cyclopentan) durch die Temperatur des sich bildenden PU-Schaums aus dem Schaum ausgetrieben wird.
Bei einem kontinuierlich arbeitenden Produktionsprozess wird der Aussenmantel üblicherweise durch Extrusion aufgebracht und befindet sich zu diesem Zeitpunkt wegen der hohen Temperatur von typischerweise 80 - 250 °C in einem Zustand, in dem er leicht verformt werden kann. Die Blasen werden dann an der Aussenseite des isolierten Rohres sichtbar, weil das austretende Treibmittel den Aussenmantel aufbläht. Dies gilt gleichermassen für isolierte Rohre mit einem gewellten, einem glatten und einem korrugierten Aussenmantel. Das Austreten des Treibmittels wird gefördert durch die Temperatur des aufextrudierten Aussenmantels. Rohre mit solchen Defekten sind als Ausschuss zu betrachten und können nicht mehr der zweckmässigen Bestimmung zugeführt werden.

Die Bildung von Blasen wird verhindert, wenn der Gehalt des Cyclopentans an der Zellgaszusammensetzung des resultierenden isolierenden Schaums 0-50 Vol% beträgt, bevorzugt 0-45 Vol%, besonders bevorzugt 0-40 Vol%, meist bevorzugt 0-35 Vol%.

Überraschenderweise wurde festgestellt, dass bei der Verwendung von HFO als Treibmittel die erwähnte Blasenbildung nicht eintritt. Dies gilt insbesondere wenn der Gehalt des HFO an der Zellgaszusammensetzung des resultierenden isolierenden Schaums in den vorstehend genannten Grenzen liegt. Das beschriebene Verhalten ist umso überraschender, da die Siedepunkte im Falle des HFO 1233zd 19 °C bzw. im Falle des HFO 1336mzz 33 °C betragen. Dies im Vergleich zu Cyclopentan, dessen Siedepunkt 49 °C beträgt. Aufgrund dieser Siedepunkte ist die Erwartung, dass die Bildung von Blasen bei der Verwendung des niedrig siedenden HFO als Treibmittel ausgeprägter wäre als bei der Verwendung höher siedender (Cyclo)-Alkane, z.B. Cp. Das Gegenteil wurde beobachtet.

Hydrofluorolefine (HFOs) sind bekannt und kommerziell erhältlich bzw. nach bekannten Methoden herstellbar. Diese eignen sich als Treibgas, insbesondere wegen ihres geringen Treibhauspotentials (Global Warming Potential, GWP) und wegen ihrer Unschädlichkeit gegen die Ozonschicht der Atmosphäre (Ozone Depleting Potential, ODP). Der Begriff umfasst sowohl Verbindungen, die nur Kohlenstoff, Wasserstoff und Fluor umfassen, als auch solche Verbindungen, die zusätzlich Chlor enthalten (auch als HFCO bezeichnet) und jeweils mindestens eine ungesättigte Bindung im Molekül enthalten. HFOs können als Gemisch verschiedener Komponenten oder als reine Komponente vorliegen. HFOs können ferner als isomere Gemische, insbesondere E-/Z-Isomere, oder als isomerenreine Verbindungen vorliegen.

Im Rahmen der vorliegenden Erfindung besonders geeignete HFOs sind ausgewählt aus der Gruppe umfassend Verbindungen der Formel (I) 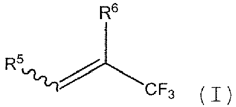 worin R⁵ für H, F, Cl, CF₃ bevorzugt Cl, CF₃, und R⁶ für H, F, Cl, CF₃, bevorzugt H steht.

Besonders geeignete HFOs sind R1233zd (z.B. Solstice LBA, Fa. Honeywell) und R1336mzz (z.B. Formacel 1100, Fa. Du-Pont).

Es hat sich überraschend gezeigt, dass die hier beschriebenen Leitungsrohre ein verbessertes Dämmverhalten aufweisen, wenn die Zellgase der Dämmung zumindest 10 vol%, bevorzugt zumindest 30 vol% besonders bevorzugt mindestens 50 vol% HFO enthalten. Es hat sich ferner gezeigt, dass die Zugabe von derartigen HFOs zu den Ausgangsmaterialien der Schaumstoffdämmung zu einer verbesserten Herstellbarkeit führt.

**(Cyclo)-Alkane** sind als Zellgas der Dämmung in thermisch isolierten Rohren bekannt. Erfindungsgemäß ist das besagte Alkan bzw. Cycloalkan ausgewählt aus der Gruppe umfassend Propan, Butane, Pentane, Cyclopentan, Hexane, Cyclohexan. Durch die Kombination von (Cyclo)-Alkan mit HFO kann eine Feinjustierung der Produkteigenschaften erfolgen, und / oder die Herstellbarkeit verbessert werden und / oder eine Kostenreduktion mit vertretbaren Qualitätseinbussen erfolgen. Die genannten (Cyclo)-Alkane können als reine Verbindung oder als Gemische vorliegen; die aliphatischen Alkane können als isomerenreine Verbindungen oder als Isomerengemische vorliegen. Ein besonders geeignetes (Cyclo)-Alkan ist Cyclopentan.

**Kohlendioxid:** Falls der Schaumstoff aus PU oder Polyisocyanurat (PIR) gebildet wird, entsteht typischerweise in gewisser Menge CO₂, da das Ausgangsmaterial Polyol in technischer Qualität normalerweise eine kleine Menge Wasser enthält. Dieses reagiert dann mit dem Isocyanat zur Carbaminsäure, welche spontan CO₂ abspaltet. Der CO₂-Gehalt des Zellgases ist somit an die Reinheit der Ausgangsmaterialien geknüpft und liegt typischerweise unter 50 vol.%. Falls die Ausgangsmaterialien wasserfrei sind, bspw. wenn Polyolefine geschäumt werden, so ist der CO₂-Gehalt des Zellgases bei 0 vol%. Der CO₂-Gehalt des Zellgases kann somit über die Wahl der Ausgangsmaterialien (bzw. deren Reinheit) beeinflusst werden.

**Weitere Zellgase:** Produktionsbedingt können aus der Atmosphäre / Umgebungsluft Komponenten in das Zellgas gelangen. Dies sind im Wesentlichen N₂ und / oder O₂, bspw. Luft. Der Gehalt an diesen Zellgasen liegt typischerweise unter 5 vol.%. Falls die Produktionsanlage speziell eingerichtet ist, so kann der Kontakt mit der Atmosphäre / Umgebungsluft vermieden werden und der Gehalt weiterer Zellgase ist bei 0 vol%.

**Schaumstoff:** Die besagte Wärmedämmung (3) umfasst (d.h. enthält oder besteht aus) einen Schaumstoff. Solche Schaumstoffe sind an sich bekannt, besonders geeignet sind Schaumstoffe, welche die Normen DIN EN 253:2015-12 (insbesondere für KMR) und EN15632-1:2009/A1:2014, EN15632-2:2010/A1:2014 und EN15632-3:2010/A1:2014 (insbesondere für PMR) erfüllen. Der Begriff umfasst Hartschäume und Weichschäume. Schaumstoffe können geschlossenzellig oder offenzellig sein, bevorzugt geschlossenzellig, insebsondere wie in der Norm DIN EN 253:2015-12 dargelegt. Erfindungsgemäß werden solche Schaumstoffe ausgewählt aus der Gruppe der Polyurethane (PU), der Polyisocyanurate (PIR), der thermoplastischen Polyester (insbesondere PET), der thermoplastischen Polyolefine (insbesondere PE und PP).

Es hat sich gezeigt, dass die folgenden Kombinationen aus Schaumstoff und Zellgas besonders vorteilhaft sind.:
- PU enthaltend 50-100 vol% R1233zd und 0-50 vol% Cp;
- PU enthaltend 50-100 vol% R1336mzz und 0-50 vol% Cp;
- PIR enthaltend 50-100 vol% R1233zd und 0-50 vol% Cp;
- PIR enthaltend 50-100 vol% R1336mzz und 0-50 vol% Cp;
- PET enthaltend 50-100 vol% R1233zd und 0-50 vol% Cp;
- PET enthaltend 50-100 vol% R1336mzz und 0-50 vol% Cp;
- PE enthaltend 50-100 vol% R1233zd und 0-50 vol% Cp;
- PE enthaltend 50-100 vol% R1336mzz und 0-50 vol% Cp.

In einer Ausgestaltung ergänzen sich die genannten Zellgase zu 100 vol%. In einer weiteren Ausgestaltung ergänzen sich diese Zellglase zusammen mit CO₂ und Luft zu 100%. In einer weiteren Ausgestaltung ist das Verhältnis von HFO : Cp mindestens 2.5:1.

Es hat sich ferner gezeigt, dass die folgenden Kombinationen aus Schaumstoff und Zellgas besonders vorteilhaft sind:
- PU enthaltend 50-100 vol% R1233zd und 0-50vol% Cp und 0-50 vol% CO₂;
- PU enthaltend 50-100vol% R1336mzz und 0-50 vol% Cp und 0-50 vol% CO₂;
- PIR enthaltend 50-100vol% R1233zd und 0-50 vol% Cp und 0-50 vol% CO₂;
- PIR enthaltend 50-100vol% R1336mzz und 0-50 vol% Cp und 0-50 vol% CO₂
- PU enthaltend 50-100 vol% R1233zd und 0-45vol% Cp und 10-40 vol% CO₂;
- PU enthaltend 50-100vol% R1336mzz und 0-45 vol% Cp und 10-40 vol% CO₂;
- PIR enthaltend 50-100vol% R1233zd und 0-45 vol% Cp und 10-40 vol% CO₂;
- PIR enthaltend 50-100vol% R1336mzz und 0-45 vol% Cp und 10-40 vol% CO₂.
In einer Ausgestaltung ergänzen sich die genannten Zellgase zu 100 vol%. In einer weiteren Ausgestaltung ergänzen sich diese Zellglase zusammen mit Luft zu 100%. In einer weiteren Ausgestaltung ist das Verhältnis von HFO:Cp mindestens 3:1.

In einer weiteren Ausgestaltung besteht die Wärmedämmung aus den genannten Schaumstoffen und den genannten Zellgasen.

**Barriere (9)** : Diffusionsbarrieren sind im Bereich Leitungsrohre / Rohrsysteme an sich bekannt. Sofern eine Barriere vorliegt, ist diese Barriere als Schicht ausgebildet. Es ist bevorzugt, dass mindestens eine Barriere (9) wie nachstehend beschrieben vorliegt. Besonders bevorzugt ist, dass eine Barriere (9) wie nachstehend beschrieben vorliegt. Diese Schicht (9) ermöglicht, dass die Diffusion von Zellgasen aus der Wärmedämmung hinaus und von Gasen ausserhalb des Leitungsrohrs (insbesondere Luft) in die Wärmedämmung hinein reduziert wird. Diese Eigenschaft ist wichtig, um die Isolationsfähigkeit des Leitungsrohrs / Rohsystems über längere Zeit sicher zu stellen.
Diese Schicht ermöglicht in einer vorteilhaften Ausgestaltung ferner, dass die Diffusion von Wasser aus der Wärmedämmung heraus ermöglicht wird. Diese Eigenschaft ist insbesondere wichtig für Leitungsrohre / Rohrsysteme, deren Mediumrohr (4) aus Kunststoff besteht. Wird in derartigen Leitungsrohren / Rohrsystemen ein wässriges Medium transportiert, kann Wasser aus dem Medium durch das Leitungsrohr in die Dämmung gelangen und so die Isolationsfähigkeit vermindern und den Dämmstoff schädigen.
Diese Schicht ermöglicht in einer vorteilhaften Ausgestaltung ferner, eine gewisse Durchlässigkeit für CO₂ gegeben ist. Ein besonders geeigneter Wert für die CO₂ Durchlässigkeit liegt im Bereich von 0.5 - 100 cm³/m²*Tag*bar. Vorteilhaft ist daher eine Barriere mit selektiven Eigenschaften, insbesondere: (i) Permeabel für Wasser und Wasserdampf, (ii) impermeabel für die Zellgase, welche eine niedrige Wärmeleitfähigkeit aufweisen, (iii) permeabel für die Zellgase, die produktionsbedingt entstehen aber eine relativ hohe intrinsische Wärmeleitfähigkeit aufweisen (bspw. CO₂), (iv) impermeabel für die Gase aus der Umgebung, insbesondere Stickstoff und Sauerstoff und Luft.

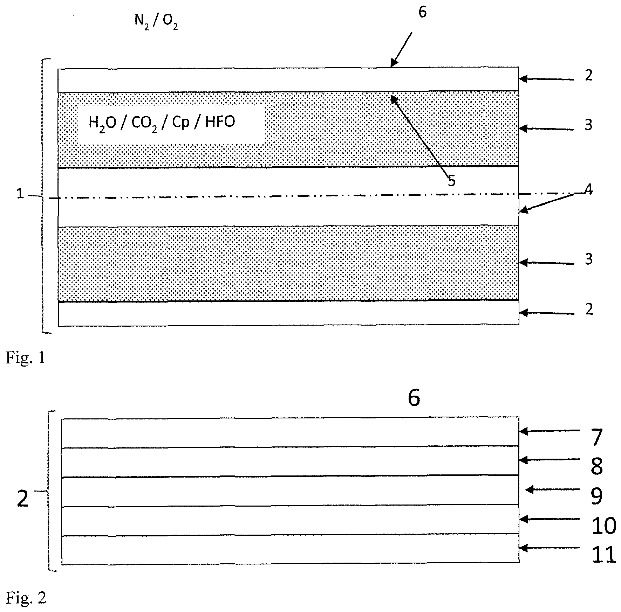

Es hat sich gezeigt, dass ein Leitungsrohr der eingangs genannten Art, bei dem die Barriere eines oder mehrere der nachstehend genannten Polymere umfasst, die Anforderungen sehr gut erfüllt. Erfindungsgemäss kann die Barriere in einer einzigen Schicht vorliegen oder in mehreren, voneinander getrennten Schichten. Ferner kann die Barriere mittels einer zusätzlichen Schicht an die Dämmung oder den Aussenmantel oder im Aussenmantel angebracht sein ("Haftvermittlerschicht" (8), (10)).
Die Barriere (9) kann als Schicht im Aussenmantel (2) angeordnet sein; dies ist bevorzugt, insbesondere ist diese Ausgestaltung bevorzugt mit zwei an die Barriere (9) angrenzenden Haftvermittlerschichten (8, 10) wie in Fig. 2 dargelegt.
Ferner kann die Barriere als Schicht auf der Aussenseite und / oder der Innenseite des Aussenmantels angeordnet sein. Ferner kann die Barriere vom Aussenmantel gebildet werden. Ferner kann die Barriere (9) als Schicht zwischen der Wärmedämmung (3) und dem Aussenmantel (2) angeordnet sein. In dieser Ausgestaltung entfällt typischerweise die Haftvermittlerschicht.
Vorteilhaft weist die Barriereschicht (9) eine Schichtdicke von 0.05 - 0.5 mm, bevorzugt 0.1 - 0.3 mm auf. Falls die Barriere den Aussenmantel bildet, weist die Barriere vorteilhaft eine Schichtdicke von 0.5 - 5 mm auf. Sofern vorhanden, weisen die Haftvermittlerschichten (8, 10) unabhängig voneinander vorteilhaft eine Schichtdicke von 0.02 - 0.2 mm auf.

Bevorzugt umfasst die Barriere ein Co-Polymer des Ethylens mit Kohlenmonoxid oder mit Vinylalkohol.

In einer vorteilhaften Ausgestaltung umfasst die Barriere ein Polymer, welches Polyketone enthält oder aus Polyketonen besteht. Entsprechend umfasst die Polymerschicht Polyketone und Blends von Polyketonen sowie Laminate enthaltend Polyketone. Polyketone sind an sich bekannte Materialien und charakterisiert durch die Keto-Gruppe (C=O) in der Polymerkette. In dieser Ausgestaltung weist dass das Polymer vorteilhaft zu 50 - 100 Gew.%, bevorzugt zu 80-100 Gew.%, Struktureinheiten Formeln (II) oder der Formel (III) auf. 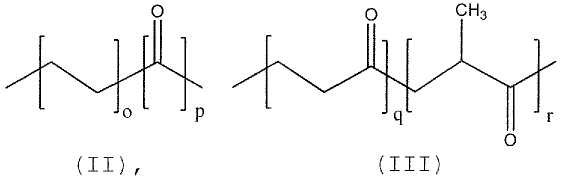 wor i n
- o: für 1 oder 2, bevorzugt 1, steht,
- p: für 1 oder 2, bevorzugt 1, steht,
- q: für 1-20 steht und
- r: für 1-20 steht.
Polyketone sind durch katalytische Umsetzung von Kohlenmonoxid mit den entsprechenden Alkenen, wie Propen und/oder Ethen, erhältlich. Solche Ketone werden auch als aliphatische Ketone bezeichnet. Diese Polymere sind kommerziell erhältlich, bspw. als Polyketone Copolymer (Formel II) oder Polyketone Terpolymer (Formel III) der Fa. Hyosung. Solche Polyketone sind ferner unter dem Handelsnamen Akrotek® PK kommerziell erhältlich. Geeignete Polymere weisen eine Schmelztemperatur von über 200°C auf (gemessen mit DSC 10 K/min gemäss IS011357-1/3) und/oder besitzen eine niedrige Wasseraufnahme von unter 3 %, gemessen gemäss der DIN EN ISO 62 (Sättigung in Wasser bei 23 °C).

In einer vorteilhaften Ausgestaltung umfasst die Barriere ein Polymer, welches Ethyl-vinylalkohol enthält oder aus Ethyl-vinylalkohol besteht.
In dieser Ausgestaltung weist dass das Polymer zu 50 - 100 Gew.%, bevorzugt zu 80-100 Gew.%, Struktureinheiten der Formel (IV) auf. 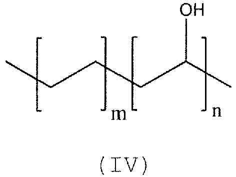 worin
m für 1-10 steht,
n für 2-20 steht.
Geeingete Ethyl-Vinylalkoholne sind insbesondere statistische Copolymere in denen das Verhältnis m/n bei 30/100 bis 50/100 liegt. Diese Polymere sind kommerziell erhältlich, bspw. als EVAL FP Serie oder EP Serie der Fa. Kuraray. Diese zeichnen sich aus durch eine gute Verarbeitbarkeit aus, insbesondere lassen sie sich sehr gut gemeinsam mit dem normalerweise verwendeten Mantelmaterial Polyethylen (PE) durch Coextrusion verarbeiten weil deren Schmelviskositäten und Schmelztemperaturen in einem ähnlichen Bereich liegen.

Die Kombination von Zellgasen aus der Gruppe der Hydroolefine und Barriereschichten gemäss den hier beschriebenen Formeln (II), (III), (IV) führt zu besonders guten, überadditiven Isolationseigenschaften der thermisch isolierten Leitungsrohre. Ein derartiges positives Zusammenwirken dieser Komponenten ist überraschend. Ohne sich an eine Theorie gebunden zu fühlen kann dieser überadditive Effekt auf die Barriereeigenschaften der Materialien gemäss Formeln (II), (III), (IV) zurück geführt werden.

**Mediumrohr** (4): Grundsätzlich können alle für thermisch gedämmte Rohre geeignete Mediumrohre verwendet werden. Entsprechend kann das Mediumrohr als Wellrohr, als glattes Rohr oder als Rohr mit einem korrugierten Mantel ausgebildet sein; es ist als ein flexibles Rohrstück ausgebildet.

Das Mediumrohr kann aus polymerem Werkstoffen oder metallischen Werkstoffen, bevorzugt aus polymeren Werkstoffen bestehen. Solche Materialien sind an sich bekannt und sind kommerziell erhältlich oder nach bekannten Verfahren hergestellt. Die Materialien werden vom Fachmann nach Einsatzzweck, ggf. nach Routineversuchen, ausgewählt.

In einer Ausgestaltung ist besagtes Mediumrohr (4) ein flexibles Kunststoffrohr, der Kunststoff ausgewählt aus der Gruppe Acrylnitril-Butadien-Styrol (ABS), vernetztes Polyethylen (PEXa, PEXb, PEXc), PE, Polybuten (PB), Polyethylen Raised Temperature (PE-RT), und Polyketon (PK).

In einer weiteren Ausgestaltung ist besagtes Mediumrohr (4) ein flexibles Kunststoffrohr mit einer äusseren Metallschicht, der Kunststoff ausgewählt aus der Grupp ABS, PEXa, PEXb, PEXc, PE, PB, PE-RT und PK, das Metall ausgewählt aus der Gruppe Aluminium einschliesslich dessen Legierungen. Solche Innenrohre sind auch als Verbundrohre bekannt.

In einer weiteren Ausgestaltung ist besagtes Mediumrohr (4) ein flexibles Metallrohr, das Metall ausgewählt aus der Gruppe Kupfer einschliesslich dessen Legierungen, Eisen einschliesslich dessen Legierungen (wie z.B nichtrostende Stähle), Aluminium einschliesslich dessen Legierungen.

In einer weiteren Ausgestaltung des Mediumrohrs (4) kann die bereits erwähnte Barriere aus Kunststoff auf der Aussenseite des Innenrohrs angeordnet sein oder sie kann vom Mediumrohr selber gebildet werden. Eine Barriere auf dem Mediumrohr, oder vom Mediumrohr selber gebildet, verringert die Diffusion von Dampf aus dem Mediumrohr in die Wärmedämmung. Erfindungsgemäss wird eine solche ("zweite") Barriere mit einer weiteren ("ersten") Barriere oberhalb der Wärmedämmung kombiniert.

**Aussenmantel** (2): Grundsätzlich können alle für thermisch gedämmte Rohre geeigneten Aussenmäntel verwendet werden. Entsprechend kann der Aussenmantel als Wellrohr oder als solches mit einem korrugierten Mantel ausgebildet sein. Es kann ein starres und gerades Rohrstück, ein starres gebogenes Rohrstück oder ein flexibles Rohrstück sein.

Der Aussenmantel kann aus polymerem Werkstoffen oder metallischem Werkstoffen, bevorzugt aus polymeren Werkstoffen bestehen. Solche Materialien sind an sich bekannt und sind kommerziell erhältlich oder nach bekannten Verfahren hergestellt. Die Materialien werden vom Fachmann nach Einsatzzweck, ggf. nach Routineversuchen, ausgewählt. Vorteilhaft kommen thermoplastische Polymere, wie kommerzielle PE Typen, zum Einsatz. Geeignet sind PE hoher Dichte (HDPE), PE niedriger Dichte (LDPE), lineares PE niedriger Dichte (LLDPE). Die Schichtdicke des Aussenmantels (2) kann in weiten Bereichen variieren, liegt aber typischerweise bei 0.5 - 20 mm, inkl. der möglicherweise vorliegenden Barriere und Sperrschichten.

In einer Ausgestaltung der Erfindung enthält der Aussenmantel die hier beschriebene Barriere, wie vorstehend beschrieben. Diese Ausgestaltung ist vorteilhaft, da mittels Coextrusion Mantel und Barriere gleichzeitig und somit kostengünstig erzeugt werden können.

In einer alternativen Ausgestaltung der Erfindung enthält der Aussenmantel die hier beschriebene Barriere, wie vorstehend beschrieben, nicht. In dieser Ausgestaltung liegt die Barriere als separate Schicht vor. Diese Ausgestaltung ist vorteilhaft, da Mantel und Barriere separat und somit flexibel erstellt werden können.

In einer **vorteilhaften Ausführungsform** betrifft die Erfindung ein Leitungsrohr wie hier beschrieben, in welchem besagter Aussenmantel (2) als Wellrohr ausgebildet ist; und besagtes Mediumrohr als ein flexibles Rohrstück ausgebildet ist und insbesondere mindestens ein Mediumrohr auf der Basis von Polyethylen aufweist und eine Wärmedämmung auf der Basis von PU und einen Aussenmnatel auf der Basis von Poylethylen.

In einer **weiteren vorteilhaften Ausführungsform** betrifft die Erfindung ein Leitungsrohr wie hier beschrieben, in welchem besagter Aussenmantel (2) als korrugiertes Rohr ausgebildet ist. Vorteilhafterweise werden solche Leitungsrohre mit einem Mediumrohr kombiniert, welches als flexibles Rohrstück ausgebildet ist und insbesondere mindestens ein Mediumrohr auf der Basis von Polyethylen oder vernetztem Polyethylen umfasst. Vorteilhafterweise werden solche Leitungsrohre ferner mit einer Wärmedämmung (3) versehen, die einen Schaumstoff umfasst, dessen Zellgas die vorstehend genannten Zusammensetzung aufweist (wobei das Zellgas besonders bevorzug zu höchstens 35% (Cyclo)Alkane enthält).

In einem **zweiten Aspekt** betrifft die Erfindung Verfahren zur Herstellung von thermisch gedämmten Leitungsrohren, wie hier beschrieben. Der Erfindung liegt entsprechend die Aufgabe zu Grunde, verbesserte Verfahren zur Herstellung eines Leitungsrohrs zu schaffen, welches sowohl kontinuierlich als auch diskontinuierlich geführt werden kann.

Dieser Aspekt der Erfindung soll nachstehend näher erläutert werden.

Grundsätzlich können die hier beschriebenen thermisch isolierten Vorrichtungen (vgl. erster Aspekt der Erfindung) in Analogie zu den bekannten Verfahren hergestellt werden. Dabei werden die bekannten Treibmittel (blowing agents, bspw. Cyclopentan, CO₂) durch die hier beschriebenen HFOs teilweise oder vollständig ersetzt. Entsprechend können an sich bekannte Anlagen für die Herstellung verwendet werden, ggf. nach Anpassung an neue Parameter, wie sie der Fachmann in seiner Routinetätigkeit durchführen kann. Die in den eingangs genannten Dokumenten EP0897788 und EP2213440 und EP2248648 und WO2008/019791 und EP1355103 und EP2340929 beschriebenen Verfahren werden hiermit durch Referenz aufgenommen.

In einer vorteilhaften Ausführungsform des Verfahrens wird die Wärmedämmung (3) durch Aufschäumen einer Kunststoffzusammensetzung gebildet, welche Polymerkomponenten zur Schaumstoffbildung und HFO als Treibmittel enthält. Erfindungsgemäss kann das HFO entweder einer der Komponenten zudosiert werden und dann verarbeitet werden oder die Ausganskomponenten und das HFO werden gleichzeitig in einer Dosiervorrichtung (bspw. der Mischkopf) kombiniert.

In einer weiteren vorteilhaften Ausführungsform des Verfahrens umfasst die Kunststoffzusammensetzung zwei flüssige Komponenten, wobei die erste Komponente ein Polyol und HFO enthält und die zweite Komponente Isocyanat enthält. Bei der Isocyanat Komponente handelt es sich bevorzugt um solche auf der Basis von Methylendiisocyanat. Aber auch andere Isocyanate wie beispielsweise solche auf der Basis von Toluol-2,4-diisocyanat oder aliphatischen Isocyanaten können verwendet werden.

In einer weiteren vorteilhaften Ausführungsform des Verfahrens umfasst die Kunststoffzusammensetzung zwei flüssige Komponenten, wobei die erste Komponente ein Polyol enthält und die zweite Komponente Isocyanat und HFO enthält. Insbesondere solche HFO Komponenten sind bevorzugt, welche eine gute Mischbarkeit mit den beiden flüssigen Komponenten aufweisen und deren Siedepunkt nicht zu niedrig liegt (insbesondere nicht unter 10 °C). Dadurch wird der apparative Aufwand in der Produktion gering; Kühlanlagen müssen nur in geringem Umfang bereitgestellt werden.

In einer weiteren vorteilhaften Ausführungsform des Verfahrens besteht die Kunststoffzusammensetzung aus einer geschmolzenen Komponente und diese Schmelze wird mit HFO unter Druck kombiniert.

**Variante 1:** Sofern das thermisch gedämmte Rohr dieser Erfindung ein oder mehrere flexible(s) Mediumrohr(e) umfasst und der Aussenmantel (13) eine Barriere aus Kunststoff, ist eine Verfahrensvariante vorteilhaft, in welcher
(a) das mindestens eine Mediumrohr kontinuierlich zugeführt wird und mit einer zu einem Schlauch geformten Kunststofffolie umhüllt wird,
(b) in den Raum zwischen Mediumrohr und Schlauch eine aufschäumbarer Kunststoffzusammensetzung als Wärmedämmschicht eingebracht wird,
(c) das Mediumrohr und der Schlauch in ein aus mitlaufenden Formteilen gebildetes Werkzeug eingebracht werden und dieses Werkzeug an dessen Ende verlassen, und danach
(d) auf die Oberfläche des Schlauches der Aussenmantel extrudiert wird,
wobei die aufschäumbare Kunststoffzusammensetzung die Polymerkomponente(n) zur Schaumstoffbildung und HFO als Treibmittel enthält. In dieser Verfahrensvariante kann
- die Barriere zwischen der aufgeschäumten Wärmedämmschicht und der Innenseite des Aussenmantels eingebracht werden, indem der Schlauch aus dem Polymer gebildet wird; oder
- die Barriere durch Coextrusion zusammen mit dem Aussenmantel aufgebracht werden; oder
- die Barriere direkt auf den Schlauch aufgebracht werden; oder
- zunächst eine Schicht des Aussenmantels, gefolgt durch die Barriere und gefolgt durch mindestens eine zweite Schicht des Aussenmantels aufgebracht werden.
In dieser Verfahrensvariante kann ferner in Schritt a das Innenrohr
- kontinuierlich von einem Vorrat abgezogen werden; oder
- kontinuierlich durch Extrusion hergestellt werden.

**Variante 3:** Sofern das thermisch gedämmte Rohr dieser Erfindung eine Wärmedämmung aus einem thermoplastischen Schaum, also bspw. aus PET, PE oder PP enthält, ist eine Verfahrensvariante vorteilhaft, in welcher das HFO direkt in die geschmolzene Polymermatrix eingepresst wird und nachfolgend durch Expansion zum Aufschäumen des verwendeten Thermoplasts führt. Dies kann bspw. dadurch geschehen, dass eine Polymermischung im Extruder aufgeschmolzen wird und in diese Schmelze HFO unter Druck zugeführt wird. Beim Verlassen des Werkzeugs führt das vorhandene Treibmittel zum Aufschäumen.

In einem **dritten Aspekt** betrifft die Erfindung neue Verwendungen von HFOs.

Dieser Aspekt der Erfindung soll nachstehend näher erläutert werden.

In einer ersten Ausgestaltung betrifft die Erfindung Verwendung von Hydrofluorolefinen als Zellgas der Schaumstoffdämmung in Kunststoffmediumrohrsystemen (PMR).

Vorteilhaft können HFOs als Zellgas in Schaumstoffdämmungen von Leitungsrohren wie hier (erster Aspekt) beschrieben verwendet werden.

Die Erfindung wird anhand der nachfolgenden **Beispiele** näher erläutert; diese sollen die Erfindung in keiner Weise limitieren.

### Beispiel 1: Herstellung eines erfindungsgemässen Leitungsrohrs

Von einer Vorratstrommel wurden Mediumrohre mit einem Aussendurchmesser von 63 mm und einer Wanddicke von 5.8 mm bestehend aus PExa kontinuierlich abgewickelt. Kurz vor der Schäumstation wurde dieses Mediumrohr von einer PE-Folie umschlossen, welche ihrerseits von einem Vorrat abgewickelt und über eine Formschulter zugeführt wurde. In die an der oberen Seite noch geöffneten Schlauchfolie wurde die entsprechende Menge eines Gemischs aus einem polymeren Isocyanat auf der Basis von Diphenylmethylendiisocyanat (MDI) mit einem NCO-Gehalt von 31 % und einem Polyol mit einer OH-Zahl von 410 mg KOH/g (bestimmt nach ASTMD4274D) und mit einem Wassergehalt von 0.8%) zugegeben. Die Isocyanat Komponente wurde dabei leicht überstöchiometrisch relativ zu den reaktiven OH-Gruppen eingesetzt. Die beiden Komponenten wurden vor der Zudosierung in einem Hochdruckmischkopf mit einem Druck von 150 bar intensiv durchmischt. In die Polyol Komponente ihrerseits wurde vorgängig die entsprechende Menge HFO / Cyclopentan eingerührt. Unmittelbar nach der Zugabe des Zweikomponenten Gemischs wurde die Schlauchfolie am oberen Ende verschweisst. Der unmittelbar danach entstehende PU-Schaum wurde durch Formbacken in eine zylindrische Geometrie gezwungen und nach dem Aushärten wurde kontinuierlich ein Mantel aus PE aufextrudiert.

Die erhaltenen Rohre wurden bezüglich der im Schaum enthaltenen Zellgase analysiert. Zu diesem Zweck wurden kleine Proben von etwa 3 cm³ Grösse aus dem Schaum gestanzt und diese in einem geschlossenen System mechanisch zerstört, so dass die Zellgase in die Messappartur gelangen konnten. Die vorhandenen Gase wurden qualitativ und quantitativ in einem Gaschromatographen bestimmt.

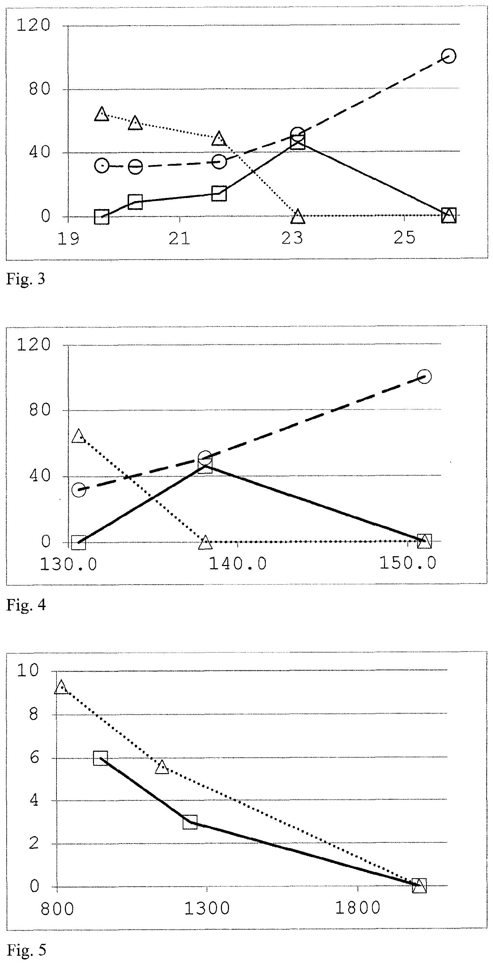

Ausserdem wurde an 3 m langen Rohrstücken der Wert der Wärmeleitfähigkeit bei 50 °C gemäss den Normen DIN EN 253:2015-12 und EN ISO 8497:1996 (λ₅₀-Wert) gemessen. Ferner wurde die Zusammensetzung des Zellgases (gemäss dem Chalmers-Verfahren; beschrieben in Rämnas et al, J. Cellular Plastics, 31, 375-388, 1995) bestimmt; diese Methode wurde auch in den Nachfolgenden Beispielen verwendet. Die Zusammenfassung der Ergebnisse findet sich in der folgenden Tabelle, eine graphische Darstellung ist in Figur 3 ersichtlich:

| **Zellgas** | **Einheit** | **No1.1** | **No1.2** | **No1.3** | **No1.4** | **No1.5** |
|---|---|---|---|---|---|---|
| CO₂* | [Vol %] | 100 | 51 | 34 | 31 | 32 |
| Cp | [Vol %] | 0 | 46 | 14 | 9 | 0 |
| HFO 1233zd | [Vol %] | 0 | 0 | 49 | 59 | 65 |
| O₂ + N₂ | [Vol %] | 0 | 3 | 3 | 1 | 3 |
| λ₅₀-Wert | [mW/m*K] | 25.8 | 23.1 | 21.7 | 20.2 | 19.6 |

| | | | | | | |
|---|---|---|---|---|---|---|
| * CO2 bildet sich zwangsweise als Nebenprodukt aus den Ausgangskomponenten und wird nicht zudosiert (Chem. Treibmittel). | | | | | | |

Die Daten belegen klar den positiven Einfluss von HFO auf die Wärmeleitfähigkeit.

### Beispiel 2: Modellversuch für schäumbare Mischungen

In einem Becherglas wurde jeweils eine Menge von 380 - 420 g Polyol vorgelegt und die in der Tabelle angegebene Menge Treibmittel eingerührt. Die Viskosität der Lösung wurde bestimmt in einem Rotationsviskosimeter des Typs Viscometer DV I-Prime der Fa Brookfield. Es wurde der Durchschnittswert aus drei Messungen aufgenommen.

Die Ergebnisse sind in der Tabelle zusammengefasst und in Fig. 5 graphisch dargestellt.

| **Treibmittel** | **Gehalt an zugegebenem Treibmittel** | **Temperatur** | **Viskosität** |
|---|---|---|---|
| | [mol/100 g Polyol] | [K] | [mPa*s] |
| Polyol | Reines Polyol, ohne Treibmittel | 292.8 | 2005 |
| Cp | 0.043 | 293.2 | 1245 |
| | 0.071 | 293.1 | 946 |
| HFO 1233zd | 0.041 | 293.0 | 1151 |
| | 0.071 | 293.1 | 815 |

Die Daten belegen klar den positiven Einfluss von HFO auf die Viskosität.

### Beispiel 3: Porengrösse in PU-Schäumen

Gemäss DIN EN 253:2015-12 wurde die durchschnittliche Porengrösse von PU-Schäumen, welche unterschiedliche Zellgase beinhalteten, bestimmt. Es wurde jeweils ein Durchschnitt aus drei Messungen gebildet.

Die Ergebnisse sind in der Tabelle zusammengefasst und in Figur 4 graphisch dargestellt:

| **Zellgas** | **Einheit** | **No3.1** | **No3.2** | **No3.3** |
|---|---|---|---|---|
| CO₂ | [Vol %] | 100 | 51 | 32 |
| Cp | [Vol %] | 0 | 46 | 0 |
| HFO 1233zd | [Vol %] | 0 | 0 | 65 |
| O₂ + N₂ | [Vol %] | 0 | 3 | 3 |
| Porengrösse | [µm] | 151.0 | 138.1 | 130.6 |

Die Daten belegen klar den positiven Einfluss von HFO auf die Zellgrösse.

### Beispiel 4: Bestimmung der Flammpunkte des Ausgangsmaterials

Gemäss der Methode nach Pensky-Martens (DIN EN ISO 2719:2003-9) wurden die Flammpunkte der Muster No 1 und No 3 bestimmt. Das Muster No 2 wurde gemäss der Methode nach Abel-Pensky (DIN 51755) vermessen. Es wurde jeweils das gleiche Polyol verwendet wie im Beispiel 1. Die Ergebnisse sind in der Tabelle zusammengefasst.

| **Komponente** | **Einheit** | **No4.1** | **No4.2** | **No4.3** |
|---|---|---|---|---|
| Polyol | [g/100 g Polyol] | 100 | 100 | 100 |
| Cp | [g/100 g Polyol] | 0 | 4.8 | 0 |
| HFO 1233zd | [g/100 g Polyol] | 0 | 0 | 8.9 |
| Flammpunkt normiert auf 1013 mbar | [°C] | 102.8 | < - 21 | > 56 |

Die Probe No 3 hat einen Flammpunkt, der deutlich höher liegt als die Vergleichsprobe No 2, welche einen äquivamolaren Gehalt an Cyclopentan enthält. Insbesondere ist die Probe No 3 nicht als entzündlich einzustufen gemäss der Verordnung EG 440/2008.

### Beispiel 5: Blasenbildung in Abhängigkeit vom Treibmittel

**Allgemein:** Entsprechend Beispiel 1 wurden thermisch gedämmte Leitungsrohre mit verschiedenen Zellgaszusammensetzungen hergestellt.

**Beispiel 5.1 (Vergleichsversuch):** In die Polyol Komponente wurde mit Hilfe eines Statikmischers eine Menge Cyclopentan (Cp) zudosiert, so dass sich bezogen auf die Polyolmenge ein Gehalt von 7 Gew % ergab. An der Oberfläche des so produzierten Rohres wurden auf einer Länge von 30 cm zwölf Blasen gezählt, welche einen Durchmesser grösser 10 mm aufwiesen und auch ohne weitere Hilfsmittel einfach zu erkennen waren.

**Beispiel 5.2** In das Polyol eine Menge von 2 Gew % Cyclopentan und 11 Gew % HFO 1233zd zudosiert. An der Oberfläche des so produzierten Rohres wurden auf einer produzierten Länge von 400 m keine Blasen festgestellt.

**Beispiel 5.3:** In das Polyol eine Menge von 15 Gew % HFO 1233zd zudosiert. An der Oberfläche des so produzierten Rohres wurden auf einer produzierten Länge von 350 m keine Blasen festgestellt.

**Ergebnisse der Beispiele 5.1-5.3:** Die so erhaltene Zusammensetzung der Zellgase wurde wie in Beispiel 1 mittels GC bestimmt, das erhaltene Rohr wurde visuell kontrolliert.

| **Bsp.** | **Zusammensetzung Zellgas** | **Kontrolle** |
|---|---|---|
| 5.1 (Vergleich) | 69% Cp | 12 Blasen auf 0.3m Länge **unbrauchbar** |
| | 29% CO2 | |
| | 0% HFO | |
| | 2% H2+ N2 | |
| 5.2 | 17% Cp | 0 Blasen auf 400m Länge **fehlerfrei** |
| | 27% CO2 | |
| | 55% HFO | |
| | 1% H2+ N2 | |
| 5.3 | 0% Cp | 0 Blasen auf 350m Länge **fehlerfrei** |
| | 27% CO2 | |
| | 71% HFO | |
| | 2% H2+ N2 | |

Die Daten belegen, dass hohe Mengen Cp zu unbrauchbaren gedämmten Leitungsrohren führen, wohingegen deren teilweiser oder vollständiger Ersatz durch HFO zu fehlerfeien gedämmten Rohren führt.

Während in der vorliegenden Beschreibung bevorzugte Ausführungen der Erfindung beschrieben sind, ist darauf hinzuweisen, dass die Erfindung nicht auf diese beschränkt ist und in auch anderer Weise innerhalb des Umfangs der folgenden Ansprüche ausgeführt werden kann.

Abel-Pensky (DIN 51755) vermessen. Es wurde jeweils das gleiche Polyol verwendet wie im Beispiel 1. Die Ergebnisse sind in der Tabelle zusammengefasst.

| **Komponente** | **Einheit** | **No4.1** | **No4.2** | **No4.3** |
|---|---|---|---|---|
| Polyol | [g/100 g Polyol] | 100 | 100 | 100 |
| Cp | [g/100 g Polyol] | 0 | 4.8 | 0 |
| HFO 1233zd | [g/100 g Polyol] | 0 | 0 | 8.9 |
| Flammpunkt normiert auf 1013 mbar | [°C] | 102.8 | < - 21 | > 56 |

Die Probe No 3 hat einen Flammpunkt, der deutlich höher liegt als die Vergleichsprobe No 2, welche einen äquivamolaren Gehalt an Cyclopentan enthält. Insbesondere ist die Probe No 3 nicht als entzündlich einzustufen gemäss der Verordnung EG 440/2008.

### Beispiel 5: Blasenbildung in Abhängigkeit vom Treibmittel

**Allgemein:** Entsprechend Beispiel 1 wurden thermisch gedämmte Leitungsrohre mit verschiedenen Zellgaszusammensetzungen hergestellt.

**Beispiel 5.1 (Vergleichsversuch):** In die Polyol Komponente wurde mit Hilfe eines Statikmischers eine Menge Cyclopentan (Cp) zudosiert, so dass sich bezogen auf die Polyolmenge ein Gehalt von 7 Gew % ergab. An der Oberfläche des so produzierten Rohres wurden auf einer Länge von 30 cm zwölf Blasen gezählt, welche einen Durchmesser grösser 10 mm aufwiesen und auch ohne weitere Hilfsmittel einfach zu erkennen waren.

**Beispiel 5.2** In das Polyol eine Menge von 2 Gew % Cyclopentan und 11 Gew % HFO 1233zd zudosiert. An der Oberfläche des so produzierten Rohres wurden auf einer produzierten Länge von 400 m keine Blasen festgestellt.

**Beispiel 5.3:** In das Polyol eine Menge von 15 Gew % HFO 1233zd zudosiert. An der Oberfläche des so produzierten Rohres wurden auf einer produzierten Länge von 350 m keine Blasen festgestellt.

**Ergebnisse der Beispiele 5.1-5.3:** Die so erhaltene Zusammensetzung der Zellgase wurde wie in Beispiel 1 mittels GC bestimmt, das erhaltene Rohr wurde visuell kontrolliert.

| **Bsp.** | **Zusammensetzung Zellgas** | **Kontrolle** |
|---|---|---|
| 5.1 (Vergleich) | 69% Cp | 12 Blasen auf 0.3m Länge **unbrauchbar** |
| | 29% CO2 | |
| | 0% HFO | |
| | 2% H2+ N2 | |
| 5.2 | 17% Cp | 0 Blasen auf 400m Länge **fehlerfrei** |
| | 27% CO2 | |
| | 55% HFO | |
| | 1% H2+ N2 | |
| 5.3 | 0% Cp | 0 Blasen auf 350m Länge **fehlerfrei** |
| | 27% CO2 | |
| | 71% HFO | |
| | 2% H2+ N2 | |

Die Daten belegen, dass hohe Mengen Cp zu unbrauchbaren gedämmten Leitungsrohren führen, wohingegen deren teilweiser oder vollständiger Ersatz durch HFO zu fehlerfeien gedämmten Rohren führt.

Während in der vorliegenden Beschreibung bevorzugte Ausführungen der Erfindung beschrieben sind, ist darauf hinzuweisen, dass die Erfindung nicht auf diese beschränkt ist und in auch anderer Weise innerhalb des Umfangs der folgenden Ansprüche ausgeführt werden kann.

## Patentansprüche

1. Thermisch gedämmtes Leitungsrohr (1), umfassend mindestens ein Mediumrohr (4), mindestens eine um das Mediumrohr herum angeordnete Wärmedämmung (3) und mindestens einen um die Wärmedämmung herum angeordneten Aussenmantel (2), **dadurch gekennzeichnet, dass**
besagtes Mediumrohr (4) als ein flexibles Rohrstück ausgebildet ist, und
besagter Aussenmantel (2) gegebenenfalls eine Barriere (9) aus Kunststoff umfasst, und
besagte Wärmedämmung (3) einen Schaumstoff umfasst, dessen Zellgas 10-100 vol% Hydrofluorolefine (HFOs) und 0-50 vol% (Cyclo)-Alkane und 0-50 vol% CO₂ enthält, und wobei
besagtes HFO ausgewählt ist aus der Gruppe umfassend Verbindungen der Formel (I) 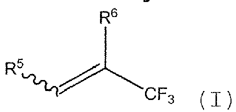 worin R⁵ und R⁶ unabhängig voneinander für H, F, Cl, CF₃ stehen und wobei
besagtes Alkan ausgewählt ist aus der Gruppe umfassend Propan, Butane, (Cyclo)-Pentane, (Cyclo)-Hexane und wobei
besagte Wärmedämmung (3) einen Schaumstoff, ausgewählt aus der Gruppe der Polyurethane (PU), der Polyisocyanurate (PIR), der thermoplastischen Polyester (PET) und der thermoplastischen Polyolefine, enthält.

2. Leitungsrohr nach Anspruch 1, **dadurch gekennzeichnet, dass** besagter Aussenmantel (2) als Wellrohr oder als korrugiertes Rohr ausgebildet ist und besagtes Mediumrohr (4) als ein flexibles Rohrstück ausgebildet ist.

3. Leitungsrohr nach einem der Ansprüche 1 oder 2 **dadurch gekennzeichnet, dass** besagtes Zellgas 10-100 vol% HFOs und 0-50 vol% (Cyclo)-Alkane und 0-50 vol% CO₂ enthält und mit der Massgabe, dass das Verhältnis HFOs zu (Cyclo)-alkane mindestens 2.5:1 beträgt.

4. Leitungsrohr nach einem der Ansprüche 1, 2 oder 3, **dadurch gekennzeichnet, dass** besagtes HFO ausgewählt ist aus der Gruppe umfassend Verbindungen der Formel (I) welche für R1233zd, und / oder R1336mzz stehen.

5. Leitungsrohr nach Anspruch 1, **dadurch gekennzeichnet, dass** besagte Wärmedämmung (3) einen Schaumstoff, ausgewählt aus der Gruppe der Polyurethane (PU) enthält.

6. Leitungsrohr nach einem der Ansprüche 1 bis 5, **dadurch gekennzeichnet, dass** besagter Schaumstoff ausgewählt ist aus
- PU enthaltend 50-100vol% R1233zd und 0-50vol% Cyclopentan als Zellgas;
- PU enthaltend 50-100vol% R1336mzz und 0-50vol% Cyclopentan als Zellgas;
- PIR enthaltend 50-100vol% R1233zd und 0-50vol% Cyclopentan als Zellgas;
- PIR enthaltend 50-100vol% R1336mzz und 0-50vol% Cyclopentan als Zellgas;
- PET enthaltend 50-100vol% R1233zd und 0-50vol% Cyclopentan als Zellgas;
- PET enthaltend 50-100vol% R1336mzz und 0-50vol% Cyclopentan als Zellgas;
- PE enthaltend 50-100vol% R1233zd und 0-50vol% Cyclopentan als Zellgas; und / oder
- PE enthaltend 50-100vol% R1336mzz und 0-50vol% Cyclopentan als Zellgas.

7. Leitungsrohr nach einem der Ansprüche 1 bis 6, **dadurch gekennzeichnet, dass** eine Barriere (9) vorliegt, die als Schicht ausgebildet ist,
- welche die Diffusion von Gasen aus der Wärmedämmung hinaus und in die Wärmedämmung hinein reduziert, und
- welche die Diffusion von Wasser aus der der Wärmedämmung heraus ermöglicht.

8. Leitungsrohr nach einem der Ansprüche 1 bis 7, **dadurch gekennzeichnet, dass** die Barriere (9)
- als Schicht auf der Wärmedämmung; und/oder
- als Schicht auf der Innenseite des Aussenmantels; und / oder
- als Schicht im Aussenmantel angeordnet ist.

9. Leitungsrohr nach einem der Ansprüche 1 bis 8, **dadurch gekennzeichnet, dass** die Barriere (9)
- ein Co-Polymer aus Ethylen und Vinylalkohol oder ein Co-Polymer aus Ethylen und Kohlenmonoxid oder ein Co-Polymer aus Ethylen und Kohlenmonoxid und Propylen umfasst, und
- eine Schichtdicke von 0.05-0.5 mm aufweist.

10. Leitungsrohr nach Anspruch 9, **dadurch gekennzeichnet, dass** das Polymer zu 50 - 100 Gew.%, Struktureinheiten der Formel (II) oder (III) oder (IV) enthält, 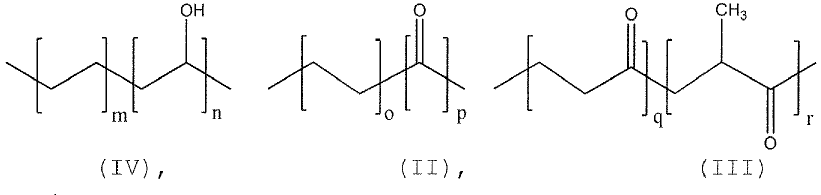 worin
m für 1-10 steht,
n für 2-20 steht, [mit m/n 30/100 bis 50/100]
o für 1 oder 2, bevorzugt 1, steht,
p für 1 oder 2, bevorzugt 1, steht,
q für 1-20 steht und
r für 1-20 steht.

11. Leitungsrohr nach einem der Ansprüche 1 bis 10, **dadurch gekennzeichnet, dass** besagtes Mediumrohr (4)
- ein flexibles Kunststoffrohr ist, der Kunststoff ausgewählt aus der Gruppe ABS, PEXa, PEXb, PEXc, PE, Polybuten (PB), Polyethylen Raised Temperature (PE-RT), und Polyketon (PK); oder
- ein flexibles Kunststoffrohr mit einer äusseren Metallschicht ist, der Kunststoff ausgewählt aus der Gruppe ABS, PEXa, PEXb, PEXc, PE, Polybuten (PB), Polyethylen Raised Temperature (PE-RT), und Polyketon (PK), das Metall ausgewählt aus der Gruppe Aluminium; oder
- ein flexibles Metallrohr ist, das Metall ausgewählt aus der Gruppe Kupfer einschliesslich dessen Legierungen, Eisen einschliesslich dessen Legierungen, Aluminium einschliesslich dessen Legierungen.

12. Leitungsrohr nach einem der Ansprüche 1 bis 11, **dadurch gekennzeichnet, dass** besagte Wärmedämmung (3) einen geschlossenzelligen Schaumstoff umfasst, dessen Zellgas
• zu 10-100 vol% aus Hydrofluorolefinen (HFOs),
• zu 0-50 vol% aus (Cyclo)-Alkanen,
• zu 0-50 vol% aus CO₂, und
• zu 0-5 vol% aus Stickstoff und/oder Sauerstoff besteht.

13. Verfahren zur Herstellung eines thermisch gedämmten Leitungsrohrs, nach einem der Ansprüche 1 bis 12, **dadurch gekennzeichnet, dass**
die Wärmedämmung (3) durch Aufschäumen einer Kunststoffzusammensetzung gebildet wird, welche Polymerkomponenten zur Schaumstoffbildung und HFO als Treibmittel enthält.

14. Verfahren nach Anspruch 13, **dadurch gekennzeichnet,**
- **dass** die Kunststoffzusammensetzung zwei flüssige Komponenten umfasst, wobei die erste Komponente ein Polyol und HFO enthält und die zweite Komponente Isocyanat enthält; oder
- **dass** die Kunststoffzusammensetzung zwei flüssige Komponenten umfasst, wobei die erste Komponente ein Polyol enthält und die zweite Komponente Isocyanat und HFO enthält; oder
- **dass** die Kunststoffzusammensetzung aus einer geschmolzenen Komponente besteht und diese Schmelze mit HFO unter Druck kombiniert wird.

15. Verfahren nach Anspruch 14 oder 13 zur Herstellung eines thermisch gedämmten Leitungsrohrs (1) mit mindestens einem flexiblen Mediumrohr (4), einer Wärmedämmschicht (3) und einem Aussenmantel (2), ggf. mit Barriere (9) aus Kunststoff, wobei
(e) das mindestens eine Mediumrohr kontinuierlich zugeführt wird und mit einer zu einem Schlauch geformten Kunststofffolie umhüllt wird,
(f) in den Raum zwischen Mediumrohr und Schlauch eine aufschäumbarer Kunststoffzusammensetzung als Wärmedämmschicht eingebracht wird,
(g) das Mediumrohr und der Schlauch in ein aus mitlaufenden Formteilen gebildetes Werkzeug eingebracht werden und dieses Werkzeug an dessen Ende verlassen, und danach
(h) auf die Oberfläche des Schlauches der Aussenmantel extrudiert wird,
**dadurch gekennzeichnet, dass** die aufschäumbare Kunststoffzusammensetzung die Polymerkomponente(n) zur Schaumstoffbildung und HFO als Treibmittel enthält.

16. Verfahren nach Anspruch 15, **dadurch gekennzeichnet, dass** eine Barriere (9) vorliegt und
- dass die Barriere zwischen der aufgeschäumten Wärmedämmschicht und der Innenseite des Aussenmantels eingebracht wird, indem der Schlauch aus dem Polymer gebildet wird; oder
- dass die Barriere durch Coextrusion zusammen mit dem Aussenmantel aufgebracht wird; oder
- dass die Barriere direkt auf den Schlauch aufgebracht wird; oder
- dass zunächst eine Schicht des Aussenmantels, gefolgt durch die Barriere und gefolgt durch mindestens eine zweite Schicht des Aussenmantels aufgebracht wird.

17. Verwendung von Hydrofluorolefinen als Zellgas der Schaumstoffdämmung in flexiblen Kunststoffmediumrohrsystemen (PMR),
wobei besagtes Zellgas 10-100 vol% Hydrofluorolefine (HFOs) und 0-50 vol% (Cyclo)-Alkane und 0-50 vol% CO₂ enthält, wobei
besagtes HFO ausgewählt ist aus der Gruppe umfassend Verbindungen der Formel (I) 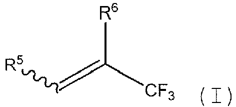 worin R⁵ und R⁶ unabhängig voneinander für H, F, Cl, CF₃ stehen und wobei
besagtes Alkan ausgewählt ist aus der Gruppe umfassend Propan, Butane, (Cyclo)-Pentane, (Cyclo)-Hexane.

18. Kunststoffmediumrohrsystem enthaltend eine Wärmedämmung, **dadurch gekennzeichnet, dass** besagte Wärmedämmung einen Schaumstoff umfasst, dessen Zellgas wie in Anspruch 17 definiert ist.

## Claims

1. Thermally insulated conduit pipe (1), comprising at least one medium pipe (4), at least one thermal insulation (3) arranged around the medium pipe, and at least one outer jacket (2) arranged around the thermal insulation, **characterized in that**
said medium pipe (4) is formed as a flexible pipe section, and
said outer jacket (2) possibly comprises a barrier (9) made of plastic, and
said thermal insulation (3) comprises a foam, the cell gas of which contains 10-100 vol% hydrofluoroolefins (HFOs) and 0-50 vol% (cyclo)-alkanes and 0-50 vol% CO₂, and wherein
said HFO is selected from the group comprising compounds of the formula (I) 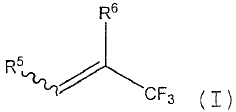 in which R⁵ and R⁶ independently of one another denote H, F, Cl, CF₃ and wherein
said alkane is selected from the group comprising propane, butane, (cyclo)-pentane, (cyclo)-hexane, and wherein
said thermal insulation (3) contains a foam, selected from the group of the polyurethanes (PU), the polyisocyanurates (PIR), the thermoplastic polyesters (PET), and the thermoplastic polyolefins.

2. Conduit pipe according to claim 1, **characterized in that** said outer jacket (2) is formed as wavy pipe or as corrugated pipe and **in that** said medium pipe (4) is formed as flexible pipe section.

3. Conduit pipe according to one of the claims 1 or 2, **characterized in that** said cell gas contains 10-100 vol% HFOs and 0-50 vol% (cyclo)-alkanes and 0-50 vol% CO₂, and with the proviso that the ratio of HFOs to (cyclo)-alkanes is at least 2.5:1.

4. Conduit pipe according to any one of claims 1, 2 or 3, **characterized in that** said HFO is selected from the group comprising compounds of the formula (I) which stand for R1233zd, and/or R1336mzz.

5. Conduit pipe according to claim 1, **characterized in that** said thermal insulation (3) contains a foam, selected from the group of polyurethanes (PU).

6. Conduit pipe according to any one of claims 1 to 5, **characterized in that** said foam is selected from
- PU containing 50-100 vol% R1233zd and 0-50 vol% cyclopentane as cell gas;
- PU containing 50-100 vol% R1336mzz and 0-50 vol% cyclopentane as cell gas;
- PIR containing 50-100 vol% R1233zd and 0-50 vol% cyclopentane as cell gas;
- PIR containing 50-100 vol% R1336mzz and 0-50 vol% cyclopentane as cell gas;
- PET containing 50-100 vol% R1233zd and 0-50 vol% cyclopentane as cell gas;
- PET containing 50-100 vol% R1336mzz and 0-50 vol% cyclopentane as cell gas;
- PE containing 50-100 vol% R1233zd and 0-50 vol% cyclopentane as cell gas; and/or
- PE containing 50-100 vol% R1336mzz and 0-50 vol% cyclopentane as cell gas.

7. Conduit pipe according to any one of claims 1 to 6, **characterized in that** a barrier (9) is provided, which is formed as a layer,
- which reduces the diffusion of gases out of the thermal insulation and into the thermal insulation, and
- which enables the diffusion of water out of the thermal insulation.

8. Conduit pipe according to any one of claims 1 to 7, **characterized in that** the barrier (9)
- is arranged as a layer on the thermal insulation; and/or
- as a layer on the inner side of the outer jacket; and/or
- as a layer in the outer jacket.

9. Conduit pipe according to any one of claims 1 to 8, **characterized in that** the barrier (9)
- comprises a copolymer of ethylene and vinyl alcohol or a copolymer of ethylene and carbon monoxide or a copolymer of ethylene and carbon monoxide and propylene, and
- has a layer thickness of 0.05-0.5 mm.

10. Conduit pipe according to claim 9, **characterized in that** the polymer contains 50-100 wt.% structural units of the formula (II) or (III) or (IV), 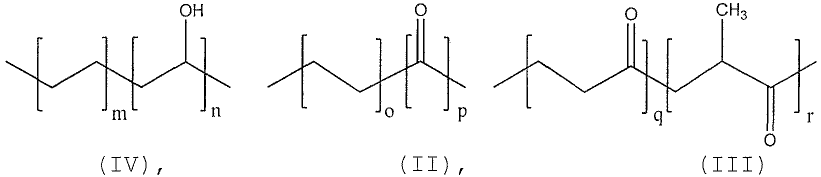 in which
m denotes 1-10,
n denotes 2-20, [where m/n 30/100 to 50/100]
o denotes 1 or 2, preferably 1,
p denotes 1 or 2, preferably 1,
q denotes 1-20, and
r denotes 1-20.

11. Conduit pipe according to any one of claims 1 to 10, **characterized in that** said medium pipe (4)
- is a flexible plastic pipe, the plastic is selected from the group ABS, PEXa, PEXb, PEXc, PE, polybutene (PB), polyethylene raised temperature (PE-RT), and polyketone (PK); or
- is a flexible plastic pipe having an outer metal layer, the plastic is selected from the group ABS, PEXa, PEXb, PEXc, PE, polybutene (PB), polyethylene raised temperature (PE-RT), and polyketone (PK), the metal is selected from the group aluminum; or
- is a flexible metal pipe, the metal is selected from the group copper including its alloys, iron including its alloys, aluminum including its alloys.

12. Conduit pipe as claimed in any one of claims 1 to 11, **characterized in that** said thermal insulation (3) comprises a closed-cell foaming material, the cell gas of which consists
- to 10-100 vol% of hydrofluoroolefines (HFOs),
- to 0-50 vol% of (cyclo)-alkanes,
- to 0-50 vol% of of CO₂, and
- to 0-5 vol% of nitrogen and/or oxygen.

13. Method for producing a thermally insulated conduit pipe according to one of the claims 1 to 12, **characterized in that**
the thermal insulation (3) is formed by foaming a plastic composition, which contains polymer components for the foam formation and HFO as a blowing agent.

14. Method according to claim 13, **characterized in that**
- the plastic composition comprises two liquid components, wherein the first component contains a polyol and HFO and the second component contains isocyanates; or
- the plastic composition comprises two liquid components, wherein the first component contains a polyol and the second component contains isocyanate and HFO; or
- the plastic composition consists of a melted component and this melt is combined with HFO under pressure.

15. Method according to claim 13 or 14 for producing a thermally insulated conduit pipe (1) having at least one flexible medium pipe (4), a thermal insulation layer (3), and an outer jacket (2), possibly with barrier (9) made of plastic, wherein
(e) the at least one medium pipe is supplied continuously and is enveloped with a plastic film formed into a tube,
(f) a foamable plastic composition is introduced as the thermal insulation layer into the space between medium pipe and tube,
(g) the medium pipe and the tube are introduced into a mold formed from accompanying molded parts and leave this mold at its end, and thereafter
(h) the outer jacket is extruded onto the surface of the tube,
**characterized in that** the foamable plastic composition contains the polymer component(s) for the foam formation and HFO as a blowing agent.

16. Method according to claim 15, **characterized in that** a barrier (9) is provided and
- the barrier is introduced between the foamed thermal insulation layer and the inner side of the outer jacket by the tube being formed from the polymer; or
- the barrier is applied by coextrusion together with the outer jacket; or
- the barrier is applied directly to the tube; or
- firstly, a layer of the outer jacket is applied, followed by the barrier, and followed by at least one second layer of the outer jacket.

17. Use of hydrofluoroolefins as cell gas of the foam insulation in flexible plastic medium pipe systems (PMR),
wherein said cell gas contains 10-100 vol% hydrofluoroolefins (HFOs) and 0-50 vol% (cyclo)-alkanes and 0-50 vol% CO₂, wherein
said HFO is selected from the group comprising compounds of the formula (I) 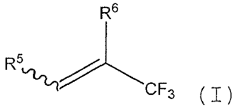 in which R⁵ and R⁶ independently of one another denote H, F, Cl, CF₃ and wherein
said alkane is selected from the group comprising propane, butane, (cyclo)-pentane, (cyclo)-hexane.

18. Plastic medium pipe system containing a thermal insulation, **characterized in that** said thermal insulation comprises a foam, the cell gas of which is defined as in claim 17.

## Revendications

1. Tuyau de conduite (1) à isolation thermique, comprenant au moins un tuyau de médium (4), au moins une isolation thermique (3) disposée autour du tuyau de fluide, et au moins une enveloppe extérieure (2) disposée autour de l'isolation thermique, **caractérisé en ce que**
ledit tuyau de médium (4) est présent sous la forme d'une section de tuyau flexible, et
ladite enveloppe extérieure (2) comprend éventuellement une barrière (9) en plastique, et
ladite isolation thermique (3) comprend une mousse, dont le gaz de cellule contient 10-100 % en volume d'hydrofluorooléfines (HFO) et 0-50 % en volume de (cyclo)-alcanes et 0-50 % en volume de CO₂, et dans laquelle
ledit HFO est choisi dans le groupe comprenant les composés de formule (I) 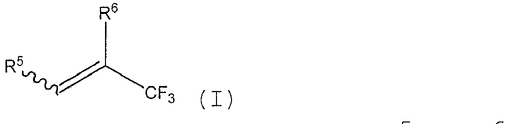 dans laquelle R⁵ et R⁶ représentent indépendamment l'un de l'autre H, F, Cl, CF₃ et où
ledit alcane est choisi dans le groupe comprenant le propane, le butane, le (cyclo)-pentane, le (cyclo)-hexane, et
ladite isolation thermique (3) contient une mousse, choisie dans le groupe des polyuréthanes (PU), des polyisocyanurates (PIR), des polyesters thermoplastiques (PET) et des polyoléfines thermoplastiques.

2. Tuyau de conduite selon la revendication 1, **caractérisé en ce que** l'enveloppe extérieure (2) est réalisée sous forme de tube ondulé et **en ce que** le tuyau de médium (4) est réalisé sous forme de section de tube flexible.

3. Tuyau de conduite selon l'une des revendications 1 ou 2, **caractérisé en ce que** ledit gaz de cellule contient 10-100% en volume de HFOs et 0-50% en volume de (cyclo)-alcanes et 0-50% en volume de CO₂, et à condition que le rapport des HFOs aux (cyclo)-alcanes soit au moins 2,5:1.

4. Tuyau de conduite selon l'une quelconque des revendications 1, 2 ou 3, **caractérisé en ce que** ledit HFO est choisi dans le groupe comprenant les composés selon la formule (I) qui représentent R1233zd, et/ou R1336mzz.

5. Tuyau de conduite selon la revendication 1, **caractérisé en ce que** ladite isolation thermique (3) contient une mousse, choisie dans le groupe des polyuréthannes (PU).

6. Tuyau de conduite selon l'une quelconque des revendications 1 à 5, **caractérisé en ce que** ladite mousse est choisie parmi
- PU contenant 50-100% en volume de R1233zd et 0-50% en volume de cyclopentane comme gaz de cellule ;
- PU contenant 50-100% en volume de R1336mzz et 0-50% en volume de cyclopentane comme gaz de cellule ;
- PIR contenant 50-100% en volume de R1233zd et 0-50% en volume de cyclopentane comme gaz de cellule ;
- PIR contenant 50-100% en volume de R1336mzz et 0-50% en volume de cyclopentane comme gaz de cellule ;
- PET contenant 50-100% en volume de R1233zd et 0-50% en volume de cyclopentane comme gaz de cellule ;
- PET contenant 50-100% en volume de R1336mzz et 0-50% en volume de cyclopentane comme gaz de cellule ;
- PE contenant 50-100% en volume de R1233zd et 0-50% en volume de cyclopentane comme gaz de cellule ; et/ou
- PE contenant 50-100% en volume de R1336mzz et 0-50% en volume de cyclopentane comme gaz de cellule.

7. Tuyau de conduite selon l'une quelconque des revendications 1 à 6, **caractérisé en ce qu'**une barrière (9) sous forme de couche est prévue,
- qui réduit la diffusion des gaz hors de l'isolation thermique et dans l'isolation thermique, et
- qui permet la diffusion de l'eau hors de l'isolation thermique.

8. Tuyau de conduite selon l'une quelconque des revendications 1 à 7, **caractérisé en ce que** la barrière (9)
- est disposé sous forme de couche sur l'isolation thermique ; et/ou
- sous forme de couche sur la face intérieure de l'enveloppe extérieure ; et/ou
- sous forme de couche dans l'enveloppe extérieure.

9. Tuyau de conduite selon l'une quelconque des revendications 1 à 8, **caractérisé en ce que** la barrière (9)
- comprend un copolymère d'éthylène et d'alcool vinylique ou un copolymère d'éthylène et de monoxyde de carbone ou un copolymère d'éthylène et de monoxyde de carbone et de propylène, et
- a une épaisseur de couche de 0,05 à 0,5 mm.

10. Tuyau de conduite selon la revendication 9, **caractérisé en ce que** le polymère contient 50-100 % en poids d'unités structurelles selon la formule (II) ou (III) ou (IV), 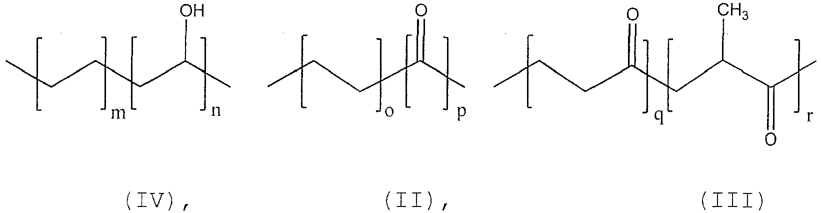 dans laquelle
m vaut de 1 à 10,
n désigne 2-20,[où m/n 30/100 à 50/100].
o représente 1 ou 2, de préférence 1,
p représente 1 ou 2, de préférence 1,
q représente 1-20, et
r représente 1-20.

11. Tuyau de conduite selon l'une quelconque des revendications 1 à 10, **caractérisé en ce que** ledit tuyau de médium (4)
- est un tuyau en plastique flexible, le plastique étant choisi dans le groupe ABS, PEXa, PEXb, PEXc, PE, polybutène (PB), polyéthylène haute température (PE-RT) et polycétone (PK) ; ou
- est un tuyau en plastique flexible ayant une couche métallique extérieure, le plastique étant choisi dans le groupe ABS, PEXa, PEXb, PEXc, PE, polybutène (PB), polyéthylène haute température (PE-RT) et polycétone (PK), le métal étant choisi dans le groupe aluminium ; ou
- est un tuyau métallique flexible, le métal étant choisi dans le groupe du cuivre incluant ses alliages, du fer incluant ses alliages, de l'aluminium incluant ses alliages.

12. Tuyau de conduite selon l'une quelconque des revendications 1 à 11, **caractérisé en ce que** ladite isolation thermique (3) comprend un matériau moussant à cellules fermées, dont le gaz de cellule consiste en
- 10-100 % en volume d'hydrofluorooléfines (HFO),
- 0-50 % en volume de (cyclo)-alcanes,
- 0-50 % en volume de CO₂, et
- 0-5 % en volume d'azote et/ou d'oxygène.

13. Procédé de fabrication d'un tuyau de conduite isolé thermiquement selon l'une des revendications 1 à 12, **caractérisé en ce que**
l'isolation thermique (3) est formée par moussage d'une composition plastique qui contient des composants polymères pour la formation de mousse et du HFO comme agent gonflant.

14. Procédé selon la revendication 13, **caractérisé en ce que**
- la composition plastique comprend deux composants liquides, le premier composant contenant un polyol et du HFO et le second composant contenant des isocyanates ; ou
- la composition plastique comprend deux composants liquides, le premier composant contenant un polyol et le second composant contenant un isocyanate et du HFO ; ou
- la composition plastique est constituée d'un composant fondu et cette masse fondue est combinée avec du HFO sous pression.

15. Procédé selon la revendication 13 ou 14 pour la fabrication d'un tube de conduite (1) à isolation thermique avec au moins un tuyau de médium flexible (4), une couche d'isolation thermique (3) et une enveloppe extérieure (2), éventuellement avec une barrière (9) en matière plastique, selon lequel
e) le au moins un tube médian est alimenté en continu et est enveloppé d'un film plastique formé dans un tube,
f) une composition plastique moussable est introduite comme couche d'isolation thermique dans l'espace entre le tuyau de médium et le tube,
g) le tuyau de médium et le tube sont introduits dans un moule formé de pièces moulées d'accompagnement et sortent de ce moule à son extrémité, et ensuite
h) l'enveloppe extérieure est extrudée sur la surface du tube,
**caractérisé en ce que** la composition plastique moussable contient le(s) composant(s) polymère(s) pour la formation de mousse et du HFO comme agent gonflant.

16. Procédé selon la revendication 15, **caractérisé en ce qu'**une barrière (9) est prévue et que
- la barrière est introduite entre la couche d'isolation thermique moussée et la face intérieure de l'enveloppe extérieure par le tube formé à partir du polymère ; ou
- la barrière est appliquée par coextrusion ensemble avec l'enveloppe extérieure ; ou
- la barrière est appliquée directement sur le tube ; ou
- d'abord, une couche de l'enveloppe extérieure est appliquée, suivie de la barrière, et suivie d'au moins une deuxième couche de l'enveloppe extérieure.

17. Utilisation d'hydrofluorooléfines comme gaz de cellule de l'isolation en mousse dans des systèmes de conduites de médium flexibles en matière plastique (PMR),
ledit gaz de cellule contenant 10-100 % en volume d'hydrofluorooléfines (HFO) et 0-50 % en volume de (cyclo)-alcanes et 0-50 % en volume de CO₂, où
ledit HFO étant choisi dans le groupe comprenant les composés selon la formule (I) 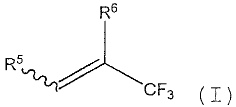 dans laquelle R⁵ et R⁶ représentent indépendamment l'un de l'autre H, F, Cl, CF₃ et où
ledit alcane étant choisi dans le groupe comprenant le propane, le butane, le (cyclo)-pentane, le (cyclo)-hexane.

18. Système de tuyauterie en matière plastique contenant une isolation thermique, **caractérisé en ce que** ladite isolation thermique comprend une mousse dont le gaz de cellule est défini selon la revendication 17.
